# FASCICULE DE BREVET EUROPEEN

(11) **EP 3 129 412 B1**
(45) Date de publication et mention de la délivrance du brevet: **12.07.2023**
(21) Numéro de dépôt: 15718533.1
(22) Date de dépôt: 01.04.2015
(51) Int. Cl.: C08F 210/02, C08L 23/08, C08L 95/00

(54) **LIANT BITUMEUX PRESENTANT UNE TEMPERATURE DE RAMOLISSEMENT AMELIOREE**
BITUMENHALTIGES BINDEMITTEL MIT VERBESSERTER ERWEICHUNGSTEMPERATUR
BITUMINOUS BINDER HAVING AN IMPROVED SOFTENING TEMPERATURE

(30) Priorité: 10.04.2014 FR 1453192
(43) Date de publication de la demande: 15.02.2017
(73) Titulaire: SK Geo Centric Co., Ltd., Jongno-gu Seoul (KR)
(72) Inventeur: QUINEBECHE, Sébastien, 27300 Bernay (FR); PALLUAULT, Vincent, 27300 SAINT MARTIN DU TILLEUL (FR)
(74) Mandataire: Bandpay & Greuter
(86) Numéro de dépôt international: PCT/FR2015/050850
(87) Numéro de publication internationale: WO 2015/155443

(56) Documents cités:
- EP-A1- 0 837 105
- US-A1- 2004 198 874
- US-A1- 2007 027 261
- US-A1- 2014 005 323

## Description

### Domaine de l'invention

L'invention appartient au domaine des enrobés bitumineux et plus précisément aux technologies relatives aux additifs fonctionnels ajoutés au bitume pour lui conférer des propriétés physico-chimiques et mécaniques particulières. Plus spécifiquement, l'invention concerne une composition de liant bitumineux comportant un mélange thermoplastique spécifique afin de lui conférer les propriétés recherchées.

L'invention se rapporte ainsi également à l'utilisation de cette association de polymères thermoplastiques particuliers pour une composition d'enrobés bitumeux ainsi qu'à cette composition.

### Etat de l'art

Le bitume ou asphalte est la portion la plus lourde dans le processus de distillation du pétrole. En raison des différentes origines et procédés de distillation de tels pétroles, le bitume résultant peut avoir une large gamme de propriétés et de caractéristiques. Dans la présente invention, le bitume désigne non seulement le produit du pétrole par distillation directe ou de la distillation de pétrole à des pressions réduites, mais également les produits provenant de l'extraction de goudron et de sables bitumineux, les produits d'oxydation et/ou de fluxage avec des solvants carbonés comprenant des paraffines et des cires de tels matériaux bitumineux, ainsi que des bitumes soufflés ou semi-soufflés, des bitumes synthétiques (tels que ceux décrits par exemple dans FR-A-2853647), des goudrons, des résines de pétrole ou des résines indène-coumarone mélangées avec des hydrocarbures aromatiques et/ou paraffiniques et les mélanges de ceux-ci, les mélanges de tels matériaux bitumineux avec des acides, et autres.

La principale application pour le bitume est dans les enrobés (enrobés bitumineux), dans lesquels le bitume est mélangé avec des agrégats qui peuvent être de différentes tailles, formes et natures chimiques. Ces enrobés bitumineux sont utilisés en particulier pour la construction, la réparation et la maintenance des trottoirs, des routes, des autoroutes, des parcs de stationnement ou des pistes d'aéroport et des voies de service et de toute autre surface de roulement. Dans la présente invention, les agrégats comprennent notamment, mais non exclusivement, les agrégats minéraux qui sont le produit de carrières ainsi que d'agrégats récupérés a partir d'enrobés précédents (« Reclaimed Asphalt Pavement », RAP), produits a partir de la démolition de rubans routiers et leurs mélanges ainsi que des fibres organiques et inorganiques, telles que les fibres de verre, de métal ou de carbone, ainsi que les fibres de cellulose, de coton, de polypropylène, de polyester, de poly(alcool vinylique) et de polyamide.

L'utilisation du bitume dans la fabrication de matériaux pour applications routières et industrielles est connue de longue date : le bitume est le principal liant hydrocarboné (pour lier les agrégats entre eux) utilisé dans le domaine de la construction routière ou du génie civil. Pour pouvoir être utilisé comme liant dans ces différentes applications et/ou dans des environnements très variés, le bitume doit présenter certaines propriétés physico-chimiques.

Ainsi, on teste classiquement les propriétés de la composition des liants bitumineux à l'aide d'un certains nombres d'outils et d'expérimentations bien définis et normés.

Trois de ces tests sont particulièrement importants et sont ceux qui sont considérés ici comme les plus pertinents pour déterminer les bonnes qualités et propriétés de la composition des liants bitumeux. Il s'agit du retour élastique selon la norme européenne EN 13398 « Bitumes et liants bitumineux. - Détermination du retour élastique des bitumes modifiés », du test de viscosité selon la norme internationale ISO 2555 « Plastiques - Résines à l'état liquide ou en émulsions ou dispersions - Détermination de la viscosité apparente selon le Procédé Brookfield » et enfin de la Température Bille-Anneau (TBA) selon la norme européenne EN 1427 (DIN 52011, NF T66-008) ou norme ASTM D36 - IP 58. La Température Bille-Anneau est un test particulièrement pertinent dans le cadre de la détermination de la gamme de température d'utilisation du liant bitumineux car elle représente la température de ramollissement du liant modifié.

En fonction de l'environnement, notamment de l'amplitude des variations de températures diurne-nocturne et saisonnières, du taux d'humidité ou du trafic sur le revêtement, les compositions des liants bitumeux doivent présenter des résultats optimums sur ces tests présentés ci-dessus. C'est pourquoi l'ajout de thermoplastiques est recommandé et nécessaire pour conférer aux liants bitumeux des propriétés physico-chimique-mécanique particulièrement intéressantes.

De plus, il est nécessaire que le liant ainsi modifié reste stable durant son stockage ou son transport à haute température pendant plusieurs heures, voire plusieurs jours. Un test de stabilité au stockage est défini dans la norme NF EN 13399.

Un certains nombre de thermoplastiques ont été utilisés comme additifs pour la composition de liants bitumeux mais il est apparu qu'un composant particulier, à savoir un terpolymère EDA-GMA (Ethylène - Dérivés Acrylates - Méthacrylate de Glycidyle) présente un intérêt pour certaines propriétés. Les documents EP 0815170 et US 5306750 divulguent l'utilisation de terpolymères Ethylène - Acrylate de Butyle - Méthacrylate de Glycidyle.

De façon classique, les thermoplastiques sont incorporés au bitume lors d'une étape d'additivation à une température comprise entre 120 et 220°C. Dans le cas des thermoplastiques réactifs fonctionnalisés par des groupements époxy, une seconde étape de maturation est nécessaire pour atteindre les propriétés optimums, selon une maturation lente (24 heures à environ 190°C) ou selon une maturation additivée en présence d'un adjuvant acide. La maturation additivée en présence d'un adjuvant acide est bien connue de l'homme du métier et est plus généralement utilisée que la maturation lente : le document EP 0837910 notamment divulgue une telle maturation additivée en présence d'un adjuvant acide.

Mais une telle classe de terpolymère présente également des inconvénients lorsqu'il est ajouté au bitume. En premier lieu, il n'est pas toujours suffisamment performant pour satisfaire des critères stricts sur le test de la Température Bille-Anneau.

Ainsi, il est recherché un additif thermoplastique pour bitumes qui permette au liant bitumeux de satisfaire les trois tests les plus discriminants pour ce type d'application (cf. tests présentés ci-dessus) et qui assure une homogénéité de l'ensemble bitume - thermoplastique aussi bien au moment du mélange que lors du stockage.

### Brève description de l'invention

De façon surprenante, la demanderesse a découvert que l'association d'un type particulier de terpolymère avec un copolymère spécifique permet d'obtenir une association de thermoplastiques qui, avec le bitume, répond à toutes les propriétés recherchées et est stable au stockage. Cette découverte va à l'encontre de ce qui pouvait être pressenti par l'homme du métier car chacun des deux thermoplastiques utilisés seuls dans le bitume, et quelle que soit sa quantité, ne permet pas d'obtenir des résultats satisfaisants sur l'ensemble des trois tests susmentionnés et/ou sur le test de stabilité au stockage. Ainsi, l'association de ces deux thermoplastiques n'a pas pour simple conséquence l'addition de leurs propriétés respectives mais bien en un effet synergique qui permet de conférer des propriétés physico-chimiques-mécaniques parfaitement adaptées à la composition de liants bitumeux.

Qui plus est, dans des rapports particuliers de quantités des deux thermoplastiques, les propriétés physico-chimiques-mécaniques sont encore améliorées.

La présente invention concerne ainsi un liant bitumineux, comprenant :
- de 97 % à 99,9 %, en poids du liant, de bitume,
- l'association de deux polymères thermoplastiques représentant de 0,1 à 3 % en poids du liant, le premier polymère consistant en un terpolymère (A) d'une alpha oléfine, d'un époxyde insaturé et d'un monomère éthylénique portant une fonction polaire choisi dans le groupe consistant en un ester d'acide carboxylique insaturé et un ester vinylique d'acide carboxylique, présentant un MFI inférieur à 50 g/10mn (190°C, 2.16 kg mesuré selon ISO 1133),
caractérisé en ce que le second un copolymère (B) consiste en copolymère d'alpha oléfine et d'un époxyde insaturé présentant un MFI inférieur à 50 g/10mn (190°C, 2.16 kg mesuré selon ISO 1133) et en ce que le ratio massique de (B)/[(A) + (B)] soit compris entre 0,25 et 0,65.

D'autres caractéristiques ou modes de réalisation de l'invention sont présentées ci-après :
- de préférence, le ratio massique de (B)/[(A) + (B)] soit compris entre 0,45 et 0,55.
- avantageusement, le monomère éthylénique portant une fonction polaire du terpolymère (A) consiste en un (méth)acrylate d'alkyle, le groupement alkyle comportant jusqu'à 24 atomes de carbones.
- de préférence, le terpolymère (A) est un terpolymère éthylène/(méth)acrylate d'alkyle/(méth)acrylate de glycidyle, ayant de 0,1% à 65% en poids de (méth)acrylate d'alkyle dont l'alkyle comporte de 1 à 10 carbones et jusqu'à 12% en poids de (méth)acrylate de glycidyle.
- de préférence, le copolymère (B) est un copolymère éthylène/(méth)acrylate de glycidyle ayant jusqu'à 12% en poids de (méth)acrylate de glycidyle .
- selon une possibilité offerte par l'invention, le liant comprend en outre un adjuvant acide, représentant au plus 5 % en poids du liant, ledit adjuvant acide étant constitué d'un ou plusieurs composés choisis dans le groupe formé par les acides phosphoriques, les acides boriques, l'acide sulfurique, les anhydrides desdits acides, l'acide chlorosulfurique, les acides polyphosphoriques, les acides phosphoniques de formule R-PO(OH)₂ et les acides de formule R-(COO)ₜ-SO₃H avec dans lesdites formules t prenant la valeur zéro ou un et R désignant un radical hydrocarboné monovalent choisi dans le groupe constitué des radicaux hydrocarbonés monovalents acycliques en C₁ à C₆ et des radicaux hydrocarbonés cycliques monovalents renfermant 4 à 12 atomes de carbone cycliques et éventuellement substitués par des radicaux hydrocarbonés monovalents acycliques en C₁ à C₁₆.
- selon un mode d'exécution avantageux, le liant selon l'invention consiste en le susdit bitume et les susdit premier et second polymères, ainsi qu'éventuellement le susdit adjuvant acide.
- le susdit premier et le second polymère présentent un MFI inférieur à 25 g/10mn (190°C, 2.16 kg mesuré selon ISO 1133), de préférence inférieur à 10 g/10mm.

L'invention présente les avantages suivants et permet ainsi l'obtention d'un liant bitumeux présentant une température bille-anneau améliorée tout en conservant des propriétés thermomécaniques satisfaisantes.

L'invention concerne ainsi une composition d'enrobés bitumeux, comprenant des agrégats et le liant bitumeux tels que présenté ci-dessus, les agrégats étant présent entre 90 % et 99 % en poids de la composition et le liant entre 10 % et 1 % de ladite composition.

La présente invention se rapporte également à l'utilisation d'une association de deux polymères thermoplastiques pour former un liant bitumeux, comprenant un terpolymère (A) d'une alpha oléfine, d'un époxyde insaturé et d'un monomère éthylénique portant une fonction polaire choisi dans le groupe consistant en un ester d'acide carboxylique insaturé et un ester vinylique d'acide carboxylique, présentant un MFI inférieur à 50 g/10mn (190°C, 2.16 kg mesuré selon ISO 1133), caractérisée en ce qu'elle comprend en outre un copolymère (B) d'alpha oléfine et d'un époxyde insaturé présentant un MFI inférieur à 50 g/10mn (190°C, 2.16 kg mesuré selon ISO 1133); le rapport massique dans le mélange pour les composants (A) et (B) étant tel que (B)/[(A) + (B)] soit compris entre 0,25 et 0,65 , de préférence entre 0,45 et 0,55.

De préférence, l'association de polymères thermoplastiques comprend uniquement le susdit terpolymère (A) et le susdit copolymère (B).

La description qui va suivre est donnée uniquement à titre illustratif et non limitatif.

### Description détaillée de l'invention

S'agissant du bitume, cet élément peut consister en tout élément entrant dans la définition ou sous l'appellation de bitume tel que l'homme du métier peut l'appréhender sans effort excessif. Une telle définition, sans être exhaustive, a été donnée précédemment dans cette description.

S'agissant du terpolymère (A), il s'agit d'un terpolymère d'une alpha oléfine, d'un époxyde insaturé et d'un monomère éthylénique portant une fonction polaire choisi dans le groupe consistant en un ester d'acide carboxylique insaturé et un ester vinylique d'acide carboxylique.

L'alpha oléfine peut être l'éthylène, le propylène, le 1-butène, l'isobutène, le 1-pentène, le 1-hexène, le 1-décène, le 4-méthyl-1-butène, le 4,4-diméthyl-1-pentène, le vinylcyclohexane, le styrène, le méthylstyrène, le styrène substitué avec des alkyls. Avantageusement, on utilise l'éthylène.

L'époxyde insaturé peut être choisi parmi:
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2 cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1 )-5-heptène-2,3-diglycidyl dicarboxylate.

Avantageusement, on utilise le (méth)acrylate de glycidyle.

Le monomère éthylénique portant une fonction polaire consiste en un ester d'acide carboxylique insaturé qui peut être par exemple un (méth)acrylate d'alkyle, le groupement alkyle pouvant avoir jusqu'à 24 atomes de carbone, ou un ester vinylique d'acide carboxylique, de préférence un acétate de vinyle.

Des exemples d'acrylate (ou méthacrylate) d'alkyle utilisables sont notamment l'acrylate de méthyle, l'acrylate d'éthyle, l'acrylate de n-butyle, l'acrylate d'isobutyle, l'acrylate de 2-éthylhexyle.

L'époxyde insaturé est copolymérisé avec l'alpha oléfine et le monomère éthylénique portant une fonction polaire selon un procédé de polymérisation radicalaire haute pression autoclave ou tubulaire.

Avantageusement, (A) est un terpolymère éthylène / (méth)acrylate d'alkyle dont l'alkyle a de 1 à 10 carbones / (méth)acrylate de glycidyle et contenant jusqu'à 65% en poids de (méth)acrylate et jusqu'à 12% en poids d'époxyde.

S'agissant du copolymère (B), il s'agit d'un copolymère d'une alpha oléfine et d'un époxyde insaturé.

L'alpha oléfine et l'époxyde insaturé peuvent être choisis parmi les mêmes produits déjà cités précédemment pour le copolymère (A).

Avantageusement, (B) est un copolymère éthylène / (méth)acrylate de glycidyle contenant jusqu'à 12% en poids d'époxyde.

L'époxyde insaturé est copolymérisé avec l'alpha oléfine selon un procédé de polymérisation radicalaire haute pression autoclave ou tubulaire.

Le liant bitumeux selon l'invention comprend avantageusement un adjuvant acide. Cet adjuvant acide est classiquement celui utilisé pour réaliser la maturation additivée destinée à obtenir le liant selon l'invention. L'adjuvant acide est de préférence l'un des acides divulgués dans le document EP 0837910 qui décrit un procédé de maturation additivée utilisant ces acides d'un type particulier.

La demanderesse a remarqué, après maintes expérimentations, que cet adjuvant acide améliore les propriétés du liant mais qu'il ne peut être présent au-delà d'un certain seuil, fonction de la nature du bitume, car il entraîne d'importants problèmes de stabilité.

Ce seuil a été déterminé aux environs de 5 % du poids (total) du liant mais il est bien entendu que ce pourcentage dépend de la nature du bitume considéré. Cette conclusion quant à l'importance de la nature du bitume s'applique également, dans une certaine mesure, aux quantités déterminées après expérimentations pour les polymères (A) et (B) formant le liant selon l'invention.

La préparation du bitume modifié avec le mélange de polymères selon la présente invention est réalisée selon une méthode bien connue de l'homme du métier. Les thermoplastiques sont incorporés dans un premier temps au bitume lors d'une étape d'additivation à une température comprise entre 120 et 220°C et plus classiquement comprise entre 160 et 190°C. Dans une seconde étape, une maturation est réalisée pour atteindre les propriétés optimums. Cette maturation peut être une maturation lente (24 heures à environ 190°C) ou selon une maturation additivée en présence d'un adjuvant acide, ces deux voies étant bien connues de l'homme du métier. La maturation additivée en présence d'un adjuvant acide est plus généralement utilisée que la maturation lente : le document EP 0837910 notamment divulgue une telle maturation additivée en présence d'un adjuvant acide. La préparation du liant bitumeux est réalisée selon une maturation additivée telle que celle décrite dans le document EP 0837910, qui est la préparation préférée pour l'obtention du liant selon l'invention, mais on pourra également envisager une préparation par maturation lente ou selon la préparation décrite dans le document EP 0815170.

Des enseignements concernant la préparation du bitume modifié (liant + bitume), puis de l'enrobé bitumeux (liant + bitume + agrégats), peuvent être trouvés dans la littérature, notamment dans le volume « Polymer modified bitumen: Properties and characterisation » édité par Tony McNally, Queen's University Belfast (édition septembre 2011).

### Obtention des formulations des compositions testées :

Les liants ont été préparés dans un réacteur régulé en température et équipé d'un système d'agitation mécanique. Chaque préparation permet la réalisation de 1 kilogramme de liant bitumeux. L'étape d'additivation est tout d'abord réalisée à une température de 180°C par incorporation des thermoplastiques dans un bitume non additivé. La vitesse d'agitation est de 400 rpm et la durée du mélange est de 2 heures et 30 minutes. L'étape de maturation est ensuite réalisée à une température de 170°C après ajout de l'adjuvant acide (0,2% de l'ensemble bitume + thermoplastiques). La vitesse d'agitation est de 400 rpm et la durée de la maturation est de 75 minutes.

### Tests réalisés :

### Test de viscosité

Les mesures de viscosité sont réalisées à l'aide d'un viscosimètre de type « Viscosimètre Brookfield ». Le dispositif de mesure utilisé est un viscosimètre Brookfield^{®} DVIII. Le principe de la mesure repose sur la mesure du couple (proportionnel à la contrainte de cisaillement) nécessaire pour maintenir constante la vitesse angulaire de rotation (proportionnelle à la vitesse de cisaillement) d'un mobile immergé dans le bitume modifié, et d'en déduire proportionnellement la viscosité de ce dernier.

La mesure s'effectue à l'aide d'un mobile SC4-21 (Norme ISO 2555). Entre 5 à 10 mL (millilitre) de bitume modifié sont introduits dans la chambre de mesure maintenue à 135 °C. Les valeurs données dans les exemples ci-dessous correspondent à une vitesse de rotation du mobile de 20 rpm et sont exprimées en mPa.s (milli Pascal seconde). La précision de la mesure est de ±10 % de la valeur indiquée.

### Test de la Température Bille Anneau

Le point de ramollissement (TBA : Température Bille-Anneau) est la température à laquelle un produit (par exemple bitumeux) atteint un certain degré de ramollissement dans des conditions normalisées.

Pour réaliser la méthode bille anneau EN 1427 (norme européenne, un anneau (à épaulement) en laiton de dimensions définies est rempli du liant bitumeux à tester. Cet anneau ainsi préparé est placé sur son support. Une bille en acier est placée sur la pastille de la prise d'essai au milieu de l'anneau.

Le cadre support est ensuite immergé dans un bain thermostaté. Le liquide du bécher, normalisé, est l'eau déminéralisée pour un essai de 30 à 80 °C, du glycérol ou de l'huile silicone pour des températures supérieures. Le bain est chauffé pour obtenir une élévation régulière de la température de 5 °C·min⁻¹ ± 0,5 °C. On note la température à l'instant où la matière entourant la bille qui s'est détachée de l'anneau touche la plaque inférieure du support. Cette température est appelée le point de ramollissement bille et anneau ou Température Bille-Anneau.

### Test de retour élastique

Le retour élastique d'un bitume modifié est un indicateur qui permet de caractériser la capacité du liant à retrouver ses caractéristiques géométriques d'origine à la suite d'une déformation. Il est déterminé à l'aide d'un essai de laboratoire utilisant un appareillage similaire à celui de l'essai de ductilité et celui de force-ductilité, appareil communément dénommé « ductilimètre ». Le dispositif de mesure utilisé est un ductilimètre Fröwag^{®} type 1.723.

La mesure se déroule comme décrit selon la Norme NF EN 13398 : après équilibre thermique des éprouvettes disposées dans l'appareil (30 minutes dans un bain d'eau thermostaté à 25°C), celles-ci sont étirées à une vitesse de 50 mm/min (millimètre par minute) pour subir un allongement de 200 mm. Dans les 10 secondes suivant la fin de l'étirage, les éprouvettes sont alors sectionnées dans leur milieu et la longueur de rétrécissement de l'éprouvette est mesurée après 30 minutes. La valeur du retour élastique est le pourcentage de longueur de rétrécissement de l'éprouvette ramené à sa longueur totale. Un taux de retour élastique de 100 % correspondrait à un liant qui recouvrirait entièrement ses dimensions originelles (avant étirage).

### Test de stabilité au stockage

Ce test est défini selon la norme NE EN 13399 (norme européenne) : un contenant cylindrique est rempli de liant modifié puis stocké verticalement dans une étuve à 180°C pendant 72 heures. La stabilité au stockage est vérifiée visuellement (absence de formation d'une « peau » de polymère en surface de l'échantillon) et quantifiée *via* la mesure de la Température de Bille-Anneau des parties haute et basse de l'échantillon. Une trop grande différence de Température de Bille-Anneau signifie qu'il existe une différence de concentration en polymère dans l'échantillon et donc que le liant modifié n'est plus homogène. Le tableau de résultat précise l'apparition d'un bitume modifié bi-phasique, lorsqu'il y a lieu, ce qui est indubitablement préjudiciable aux propriétés physico-chimiques dudit bitume.

### Matières premières des compositions testées :

Lotader^{®} AX8900 : terpolymère d'éthylène, d'acrylate de méthyle (24% poids) et de méthacrylate de glycidyle (8% poids) produit par ARKEMA possédant un MFI (190°C, 2.16 kg mesuré selon ISO 1133) de 6 g/lOmn.
Lotader^{®} AX8840 : copolymère d'éthylène et de méthacrylate de glycidyle (8% poids) produit par ARKEMA possédant un MFI (190°C, 2.16 kg mesuré selon ISO 1133) de 5 g/lOmn.
Lotryl^{®} 24MA02 : copolymère d'éthylène et d'acrylate de méthyle (24% poids) produit par ARKEMA possédant un MFI (190°C, 2.16 kg mesuré selon ISO 1133) de 2 g/lOmn.
Lotader^{®} XR1310 : terpolymère d'éthylène, d'acrylate de méthyle (12% poids) et de méthacrylate de glycidyle (8% poids) produit par ARKEMA possédant un MFI (190°C, 2.16 kg mesuré selon ISO 1133) de 6 g/lOmn.

### Bitumes :

- Bitume I = Total Azalt de pénétration 50/70 de la raffinerie de Donges (France)
- Bitume II = IRPC de pénétration 70 de la raffinerie de Rayong (Thaïlande) Acide PolyPhosphorique 116% : adjuvant acide produit par Febex.

Dans la suite, tous les tests sont réalisés avec des éprouvettes comportant un même taux du mélange ou de l'association des deux polymères, fixé à 1,8 % en poids du liant bitumeux. Néanmoins, la demanderesse a réalisé des expérimentations complémentaires afin de déterminer précisément les limites de quantités (en poids relatif) de cette association de polymères dans le liant bitumeux afin que ce dernier reste performant selon les critères fixés par la présente invention.

### Résultats des tests :

Le liant bitumineux doit présenter certaines caractéristiques avantageuses.

Ici sont reportés de façon non exhaustive les résultats relatifs à un liant bitumineux selon la présente invention. Dans ce cadre, trois caractéristiques ont été plus particulièrement visées, à savoir :
- la viscosité à 135°C du liant bitumineux qui doit idéalement être inférieure à 3000 mPa.s ; et
- le retour élastique (%) qui doit être supérieur à 70% et préférentiellement supérieur à 75% ; et
- la température bille-anneau qui doit être supérieure à 70°C et préférentiellement supérieure à 75°C ; et
- la différence de température bille-anneau entre la partie haute et la partie basse de l'échantillon après stabilité au stockage (noté Δ TBA) qui doit être inférieure à 5°C ; et enfin
- l'absence de gel (observation à l'oeil nu) au niveau du liant bitumineux.

Le tableau ci-dessous reporte une partie des résultats de tests obtenus par la titulaire. Sous toutes réserves d'interprétation, ces résultats ont permis à la titulaire de définir l'invention telle qu'énoncée dans l'ensemble des revendications annexées.

| Composition | Bitume | Taux Lotader^{®} AX8900 (A) | Taux Lotader^{®} AX8840 (B) | Taux Lotryl^{®} 24MA02 | Taux Lotader^{®} XR1310 | (B) / [(A) + (B)] | Aspect de surface | Viscosité à 135°C (mPA.s) | Retour élastique (%) | Température Bille-Anneau (°C) | Δ TBA après stabilité au stockage (°C) |
|---|---|---|---|---|---|---|---|---|---|---|---|
| 1 | I | 1,8 % | | | | 0 | Lisse | 2920 | 83,8 | 67,1 | < 5°C |
| 2 | I | | 1,8 % | | | 1 | Gélifié | 2010 | 41,8 | 77,3 | > 5°C |
| 3 | I | 1,8 % | | 0,5 % | | NA | Lisse | 3180 | 82,8 | 68,6 | < 5°C |
| 4 | I | 1,8 % | | 1,5 % | | NA | Lisse | 4570 | 81,5 | 71 | < 5°C |
| 5 | I | | | | 1,8 % | NA | Lisse | 2870 | 65,5 | 72,5 | < 5°C |
| 6 | I | 1,55 % | 0,25 % | | | 0,14 | Lisse | 2880 | 81,5 | 68,6 | < 5°C |
| 7 | I | 1,3 % | 0,5 % | | | 0,28 | Lisse | 2720 | 78,3 | 72,5 | < 5°C |
| 8 | I | 1,1 % | 0,7 % | | | 0,39 | Lisse | 2680 | 77,1 | 74,2 | < 5°C |
| 9 | I | 0,9 % | 0,9 % | | | 0,5 | Lisse | 2480 | 75,7 | 75,5 | < 5°C |
| 10 | I | 0,7 % | 1,1 % | | | 0,61 | Lisse | 2360 | 72,4 | 76,1 | < 5°C |
| 11 | I | 0,5 % | 1,3 % | | | 0,72 | Gélifié | 2250 | 63,1 | 76,9 | > 5°C |
| 12 | II | 1,8 % | | | | 0 | Lisse | 1470 | 82,5 | 63,4 | < 5°C |
| 13 | II | | 1,8 % | | | 1 | Gélifié | 1230 | 62,9 | 79,5 | > 5°C |
| 14 | II | 0,9 % | 0,9 % | | | 0,5 | Lisse | 1350 | 77,6 | 76,0 | < 5°C |

## Revendications

1. Liant bitumineux, comprenant :
- de 97 % à 99,9 %, en poids du liant, de bitume,
- l'association de deux polymères thermoplastiques représentant de 0,1 à 3 % en poids du liant, le premier polymère consistant en un terpolymère (A) d'une alpha oléfine, d'un époxyde insaturé et d'un monomère éthylénique portant une fonction polaire choisi dans le groupe consistant en un ester d'acide carboxylique insaturé et un ester vinylique d'acide carboxylique, présentant un MFI inférieur à 50 g/10mn (190°C, 2.16 kg mesuré selon ISO 1133),
**caractérisé en ce que** le second un copolymère (B) consiste en copolymère d'alpha oléfine et d'un époxyde insaturé présentant un MFI inférieur à 50 g/10mn (190°C, 2.16 kg mesuré selon ISO 1133) ; et
**caractérisé en ce que** le ratio massique de (B)/[(A) + (B)] soit compris entre 0,25 et 0,65.

2. Liant selon la revendication 1, **caractérisé en ce que** le ratio massique de (B)/[(A) + (B)] soit compris entre 0,45 et 0,55.

3. Liant selon l'une quelconque des revendications précédentes, **caractérisée en ce que** le monomère éthylénique portant une fonction polaire du terpolymère (A) consiste en un (méth)acrylate d'alkyle, le groupement alkyle comportant jusqu'à 24 atomes de carbones.

4. Liant selon l'une quelconques des revendications précédentes, **caractérisée en ce que** le terpolymère (A) est un terpolymère éthylène/(méth)acrylate d'alkyle/(méth)acrylate de glycidyle, ayant de 0,1% à 65% en poids de (méth)acrylate d'alkyle dont l'alkyle comporte de 1 à 10 carbones et jusqu'à 12% en poids de (méth)acrylate de glycidyle.

5. Liant selon l'une quelconques des revendications précédentes, **caractérisée** en ce le copolymère (B) est un copolymère éthylène/(méth)acrylate de glycidyle ayant jusqu'à 12% en poids de (méth)acrylate de glycidyle.

6. Liant selon l'une quelconque des revendications précédentes, **caractérisé en ce qu'**il comprend en outre un adjuvant acide, représentant au plus 5 % en poids du liant, ledit adjuvant acide étant constitué d'un ou plusieurs composés choisis dans le groupe formé par les acides phosphoriques, les acides boriques, l'acide sulfurique, les anhydrides desdits acides, l'acide chlorosulfurique, les acides polyphosphoriques, les acides phosphoniques de formule R-PO(OH)₂ et les acides de formule R-(COO)ₜ-SO₃H avec dans lesdites formules t prenant la valeur zéro ou un et R désignant un radical hydrocarboné monovalent choisi dans le groupe constitué des radicaux hydrocarbonés monovalents acycliques en C₁ à C₆ et des radicaux hydrocarbonés cycliques monovalents renfermant 4 à 12 atomes de carbone cycliques et éventuellement substitués par des radicaux hydrocarbonés monovalents acycliques en C₁ à C₁₆.

7. Liant selon l'une quelconque des revendications précédentes, **caractérisé en ce qu'**il consiste en le susdit bitume et les susdit premier et second polymères, ainsi qu'éventuellement le susdit adjuvant acide.

8. Liant selon l'une quelconque des revendications précédentes, **caractérisé en ce que** le susdit premier et le second polymère présentent un MFI inférieur à 25 g/10mn (190°C, 2.16 kg mesuré selon ISO 1133), de préférence inférieur à 10 g/lOmn.

9. Composition d'enrobés bitumeux, comprenant des agrégats et le liant selon l'une quelconque des revendications précédentes 1 à 8, les agrégats étant présent entre 90 % et 99 % en poids de la composition et le liant entre 10 % et 1 % de ladite composition.

10. Utilisation d'une association de deux polymères thermoplastiques pour former un liant bitumeux, comprenant un terpolymère (A) d'une alpha oléfine, d'un époxyde insaturé et d'un monomère éthylénique portant une fonction polaire choisi dans le groupe consistant en un ester d'acide carboxylique insaturé et un ester vinylique d'acide carboxylique, présentant un MFI inférieur à 50 g/10mn (190°C, 2.16 kg mesuré selon ISO 1133), **caractérisée en ce qu'**elle comprend en outre un copolymère (B) d'alpha oléfine et d'un époxyde insaturé présentant un MFI inférieur à 50 g/10mn (190°C, 2.16 kg mesuré selon ISO 1133) ; le rapport massique dans le mélange pour les composants (A) et (B) étant tel que (B)/[(A) + (B)] soit compris entre 0,25 et 0,65 , de préférence entre 0,45 et 0,55.

11. Utilisation selon la revendication 10, **caractérisée en ce que** l'association de polymères thermoplastiques comprend uniquement le susdit terpolymère (A) et le susdit copolymère (B).

## Patentansprüche

1. Bitumenhaltiges Bindemittel, umfassend:
- 97 bis 99,9 Gew.-% des Bindemittels Bitumen,
- die Kombination von zwei thermoplastischen Polymeren, die 0,1 bis 3 Gew.-% des Bindemittels darstellen, wobei das erste Polymer aus einem Terpolymer (A) eines Alpha-Olefins, eines ungesättigten Epoxids und eines Ethylenmonomers besteht, das eine polare Funktion trägt, das aus der Gruppe ausgewählt ist, die aus einem ungesättigten Carbonsäure-Ester und einem Carbonsäure-Vinylester besteht, aufweisend einen MFI unter 50 g/10 min (190 °C, 2,16 kg, gemessen nach ISO 1133),
**dadurch gekennzeichnet, dass** das zweite, ein Copolymer (B), aus Alpha-Olefin-Copolymer und einem ungesättigten Epoxid besteht, aufweisend einen MFI unter 50 g/10 min (190 °C, 2,16 kg, gemessen nach ISO 1133), und
**dadurch gekennzeichnet, dass** das Massenverhältnis von (B)/[(A) + (B)] zwischen 0,25 und 0,65 liegt.

2. Bindemittel nach Anspruch 1, **dadurch gekennzeichnet, dass** das Massenverhältnis von (B)/[(A) + (B)] zwischen 0,45 und 0,55 liegt.

3. Bindemittel nach einem der vorangehenden Ansprüche, **dadurch gekennzeichnet, dass** das Ethylenmonomer, das eine polare Funktion des Terpolymers (A) trägt, aus einem Alkyl(meth)acrylat besteht, wobei die Alkylgruppe bis zu 24 Kohlenstoffatome aufweist.

4. Bindemittel nach einem der vorangehenden Ansprüche, **dadurch gekennzeichnet, dass** das Terpolymer (A) ein Ethylen-/Alkyl(meth)acrylat-/Glycidyl-(meth)acrylat-Terpolymer ist, das 0,1 bis 65 Gew.-% Alkyl(meth)acrylat hat, dessen Alkyl 1 bis 10 Kohlenstoffe und bis zu 12 Gew.-% Glycidyl(meth)acrylat aufweist.

5. Bindemittel nach einem der vorangehenden Ansprüche, **dadurch gekennzeichnet, dass** das Copolymer (B) ein Ethylen-/Glydicyl(meth)acrylat-Copolymer ist, das bis zu 12 Gew.-% Glydicyl(meth)acrylat hat.

6. Bindemittel nach einem der vorangehenden Ansprüche, **dadurch gekennzeichnet, dass** es ferner einen sauren Hilfsstoff umfasst, der höchstens 5 Gew.-% des Bindemittels darstellt, wobei der saure Hilfsstoff aus einer oder mehreren Verbindungen besteht, die aus der Gruppe ausgewählt sind, die aus den Phosphorsäuren, den Borsäuren, der Schwefelsäure, den Anhydriden der Säuren, der Chlorsulfonsäure, den Polyphosphorsäuren, den Phosphonsäuren der Formel R-PO(OH)₂ und den Säuren der Formel R-(COO)ₜ-SO₃H ausgewählt sind, mit in den Formeln t, das den Wert null oder eins annimmt, und R, das ein einwertiges Kohlenwasserstoffradikal bezeichnet, das aus der Gruppe ausgewählt ist, die aus acyclischen einwertigen C₁-C₆-Kohlenwasserstoffradikalen und cyclischen einwertigen Kohlenwasserstoffradikalen mit 4 bis 12 cyclischen Kohlenstoffatomen und eventuell substituiert durch acyclische einwertige C₁-C₁₆-Kohlenwasserstoffatome besteht.

7. Bindemittel nach einem der vorangehenden Ansprüche, **dadurch gekennzeichnet, dass** es aus dem oben genannten Bitumen und dem oben genannten ersten und zweiten Polymer sowie gegebenenfalls dem oben genannten sauren Hilfsstoff besteht.

8. Bindemittel nach einem der vorangehenden Ansprüche, **dadurch gekennzeichnet, dass** das oben genannte ersten und zweite Polymer einen MFI unter 25 g/10 min (190 °C, 2,16 kg, gemessen nach ISO 1133), vorzugsweise unter 10 g/10 mm, aufweisen.

9. Bituminöse Mischgutzusammensetzung, umfassend Aggregate und das Bindemittel nach einem der vorangehenden Ansprüche 1 bis 8, wobei die Aggregate in zwischen 90 und 99 Gew.-% der Zusammensetzung und das Bindemittel in zwischen 10 und 1 % der Zusammensetzung vorhanden sind.

10. Verwendung einer Kombination aus zwei thermoplastischen Polymeren, um ein bituminöses Bindemittel zu bilden, umfassend ein Terpolymer (A) eines Alpha-Olefins, eines ungesättigten Epoxids und eines Ethylenmonomers, das eine polare Funktion trägt, das aus der Gruppe ausgewählt ist, die aus einem ungesättigten Carbonsäure-Ester und einem Carbonsäure-Vinylester besteht, aufweisend einen MFI unter 50 g/10 min (190 °C, 2,16 kg, gemessen nach ISO 1133), **dadurch gekennzeichnet, dass** sie ferner ein Copolymer (B) eines Alpha-Olefins und eines ungesättigten Epoxids umfasst, aufweisend einen MFI unter 50 g/10 min (190 °C, 2,16 kg, gemessen nach ISO 1133); wobei das Massenverhältnis in dem Gemisch für die Bestandteile (A) und (B) derart sind, dass (B)/[(A) + (B)] zwischen 0,25 und 0,65, vorzugsweise zwischen 0,45 und 0,55 liegt.

11. Verwendung nach Anspruch 10, **dadurch gekennzeichnet, dass** die Kombination thermoplastischer Polymere nur das oben genannte Terpolymer (A) und das oben genannte Copolymer (B) umfasst.

## Claims

1. A bituminous binder comprising:
- from 97 % to 99.9 % of bitumen, by weight of the binder,
- the association of two thermoplastic polymers representing from 0.1 % to 3 % by weight of the binder, the first polymer consisting of a terpolymer (A) of an alpha olefin, an unsaturated epoxide and an ethylene monomer carrying a polar function selected from the group consisting of an unsaturated carboxylic acid ester and a vinyl ester of carboxylic acid, having an MFI lower than 50 g/10 min (190 °C, 2.16 kg measured as per ISO 1133),
**characterized in that** the second copolymer (B) consists of a copolymer of alpha olefin and an unsaturated epoxide having an MFI lower than 50 g/10 min (190 °C, 2.16 kg measured as per ISO 1133), and
**characterized in that** the weight ratio of (B)/[(A) + (B)] is between 0.25 and 0.65.

2. The binder according to claim 1, **characterized in that** the weight ratio of (B)/[(A) + (B)] is between 0.45 and 0.55.

3. The binder according to any of the preceding claims, **characterized in that** the ethylene monomer carrying a polar function of the terpolymer (A) is an alkyl (meth)acrylate, the alkyl group having up to 24 carbon atoms.

4. The binder according to any of the preceding claims, **characterized in that** the terpolymer (A) is an ethylene/alkyl(meth)acrylate/glycidyl (meth)acrylate terpolymer having from 0.1 % to 65 % by weight of alkyl (meth)acrylate) with the alkyl having 1 to 10 carbons, and up to 12 % by weight of glycidyl (meth)acrylate.

5. The binder according to any of the preceding claims, **characterized in that** the copolymer (B) is an ethylene/glycidyl (meth)acrylate copolymer having up to 12 % by weight of glycidyl (meth)acrylate.

6. The binder according to any of the preceding claims, **characterized in that** it further comprises an acid adjuvant representing at most 5 % by weight of the binder, said acid adjuvant being composed of one or more compounds selected from the group formed by phosphoric acids, boric acids, sulfuric acid, anhydrides of said acids, chlorosulfuric acid, polyphosphoric acids, phosphonic acids of formula R-PO(OH)₂ and acids of formula R-(COO)t -SOsH, wherein, in said formulas, t has the value of zero or one, and R designates a monovalent hydrocarbon radical selected from the group consisting of C₁ to C₆ acyclic monovalent hydrocarbon radicals and cyclic monovalent hydrocarbon radicals having 4 to 12 cyclic carbon atoms and optionally substituted by C₁ to C₁₆ acyclic monovalent hydrocarbon radicals.

7. The binder according to any of the preceding claims, **characterized in that** it consists of said above bitumen and said above first and second polymers, and optionally said above acid adjuvant.

8. The binder according to any of the preceding claims, **characterized in that** the said above first and second polymers have an MFI lower than 25 g/10 min (190 °C, 2.16 kg measured as per ISO 1133), preferably lower than 10 g/10 min.

9. An asphalt mix composition comprising aggregates and the binder according to any of the preceding claims 1 to 8, the aggregates being present in an amount of between 90 % and 99 % by weight of the composition and the binder being present in an amount of between 10 % and 1 % of said composition.

10. Use of an association of two thermoplastic polymers to form a bituminous binder, comprising a terpolymer (A) of an alpha olefin, an unsaturated epoxide and an ethylene monomer carrying a polar function selected from the group consisting of an unsaturated carboxylic acid ester and a vinyl ester of carboxylic acid having an MFI lower than 50 g/10 min (190 °C, 2.16 kg measured as per ISO 1133), **characterized in that** it further comprises a copolymer (B) of alpha olefin and an unsaturated epoxide having an MFI lower than 50 g/10 min (190 °C, 2.16 kg measured as per ISO 1133); the weight ratio in the mixture for components (A) and (B) being such that (B)/[(A) + (B)] is between 0.25 and 0.65, preferably between 0.45 and 0.55.

11. The use according to claim 10, **characterized in that** the association of thermoplastic polymers solely comprises said above terpolymer (A) and said above copolymer (B).
